# EUROPÄISCHE PATENTSCHRIFT

(11) **EP 2 485 073 B1**
(45) Veröffentlichungstag und Bekanntmachung des Hinweises auf die Patenterteilung: **19.09.2018**
(21) Anmeldenummer: 12152563.8
(22) Anmeldetag: 26.01.2012
(51) Int. Cl.: G02B 6/00, F21S 8/00, F21S 6/00

(54) **Leuchte mit diffuser und gebündelter Lichtabgabe**
Light with diffuse and bundled light emission
Lampe dotée d'un dépôt de lumière diffusé et en faisceau

(30) Priorität: 27.01.2011 DE 102011003243
(43) Veröffentlichungstag der Anmeldung: 08.08.2012
(73) Patentinhaber: Zumtobel Lighting GmbH, 6850 Dornbirn (AT)
(72) Erfinder: Ladstätter, Gerald, 6833 Klaus (AT); Schwärzler, Erich, 6941 Langenegg (AT); Skergeth, Sascha, 6890 Lustenau (AT)
(74) Vertreter: Thun, Clemens

(56) Entgegenhaltungen:
- EP-A1- 1 555 477
- EP-A1- 1 835 224
- WO-A1-2006/114748
- DE-A1-102006 056 150

## Beschreibung

Die Erfindung betrifft eine Leuchte mit einer ersten Lichtquelle, einer zweiten Lichtquelle, einem Lichtleitelement und einer Lichtabgabefläche gemäß dem Oberbegriff in Anspruch 1. Dabei ist die Leuchte derart gestaltet ist, dass ein, von der ersten Lichtquelle erzeugtes, erstes Licht einen Bereich der Lichtabgabefläche durchsetzend, in einen Außenraum der Leuchte abgegeben wird und ein, von der zweiten Lichtquelle erzeugtes, zweites Licht gebündelt in den Außenraum der Leuchte abgegeben wird.

Aus der DE 10 2008 015 728 A1 ist eine derartige Leuchte in Form einer Stehleuchte bekannt. Mit der ersten Lichtquelle lässt sich dabei eine Allgemeinbeleuchtung erzeugen und mit der zweiten Lichtquelle gezielt ein Arbeitsbereich beleuchten. Bei dieser bekannten Leuchte ist die Lichtabgabefläche unterteilt in einen, eine größere Fläche umfassenden, ersten Bereich, über den das erste Licht diffus abgegeben wird und einen zweiten, kleineren, kreisförmigen Bereich, über den das zweite Licht gebündelt abgegeben wird. Es sind also jedenfalls zwei, räumlich voneinander getrennte, Lichtabgabebereiche erforderlich, wodurch die Gestaltungsmöglichkeiten der Leuchte begrenzt sind.

Aus der EP 1 555 477 A1 ist eine Leuchte mit zwei Lichtquellen bekannt. Das Licht der ersten Lichtquelle wird seitlich in eine Lichtleiterplatte eingestrahlt. Im Weiteren verlässt dieses Licht die Lichtleiterplatte über eine Flachseite und durchsetzt anschließend eine, parallel zu der Lichtleiterplatte angeordnete Lichtauskoppelplatte. Das Licht der zweiten Lichtquelle durchsetzt zunächst die Lichtleiterplatte und anschließend die Lichtauskoppelplatte.

Aus der EP 1 835 224 A1 ist eine Kraftfahrzeugleuchte mit zwei Lichtquellen bekannt. Das Licht der ersten Lichtquelle wird seitlich in eine Lichtleiterplatte eingestrahlt. Im Weiteren verlässt dieses Licht die Lichtleiterplatte über eine Flachseite und durchsetzt anschließend eine, parallel zu der Lichtleiterplatte angeordnete Abdeckscheibe. Das Licht der zweiten Lichtquelle durchsetzt zunächst die Lichtleiterplatte und anschließend die Abdeckscheibe. Auf derjenigen Seite der Lichtleiterplatte, die der zweiten Lichtquelle zugewandt ist, weist die Lichtleiterplatte Ausnehmungen auf, durch die das Licht der ersten Lichtquelle diffus gestreut wird.

Aus den weiteren Schriften WO 2006/114748 A1 und DE 10 2006 056 150 A1 sind jeweils Leuchtabgabe-Anordnungen mit zwei Lichtquellen bekannt, bei denen das Licht einer der beiden Lichtquellen seitlich in eine Lichtleiterplatte eingestrahlt wird und die Lichtleiterplatte im Weiteren über eine Flachseite wieder verlässt.

Der Erfindung liegt die Aufgabe zugrunde, eine entsprechende verbesserte Leuchte anzugeben; insbesondere soll die Leuchte verbesserte Gestaltungsmöglichkeiten aufweisen.

Diese Aufgabe wird mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchte vorgesehen, die eine erste Lichtquelle, eine zweite Lichtquelle, ein Lichtleitelement mit einer Schmalseite und einer Flachseite sowie eine Lichtabgabefläche aufweist. Dabei ist die Leuchte derart gestaltet, dass ein, von der ersten Lichtquelle erzeugtes, erstes Licht über die Schmalseite in das Lichtleitelement eintritt, über die Flachseite das Lichtleitelement verlässt und einen Bereich der Lichtabgabefläche durchsetzend, in einen Außenraum der Leuchte abgegeben wird und dass ein, von der zweiten Lichtquelle erzeugtes, zweites Licht gebündelt in den Außenraum der Leuchte abgegeben wird. Das Lichtleitelement weist außerdem eine weitere Flachseite auf, wobei die Leuchte derart gestaltet ist, dass das zweite Licht über die weitere Flachseite in die Lichtleitplatte eintritt und den Bereich der Lichtabgabefläche zumindest teilweise durchsetzend, in den Außenraum der Leuchte abgegeben wird.

Auf diese Weise wird das zweite Licht zumindest teilweise innerhalb desjenigen Bereichs der Lichtabgabefläche abgegeben, den auch das erste Licht durchsetzt. Somit entfällt das Erfordernis, zwei räumlich voneinander getrennte Lichtabgabebereiche vorzusehen. Die Gestaltungsmöglichkeiten der Leuchte sind auf diese Weise verbessert.

Erfindungsgemäß weist die weitere Flachseite zur diffusen Streuung des ersten Lichts ein Streuelement auf, wobei die Leuchte derart gestaltet ist, dass das zweite Licht zumindest teilweise neben dem Streuelement in das Lichtleitelement eintritt. Hierdurch lässt sich erzielen, dass das zweite Licht zumindest teilweise im Wesentlichen ungehindert, insbesondere ohne unerwünschte Beeinträchtigung der Bündelung, in das Lichtleitelement eintritt, während das erste Licht effektiv an der weiteren Flachseite des Lichtleitelements diffus gestreut wird.

Erfindungsgemäß ist das Streuelement auf einer, der zuerst genannten Flachseite abgewandten Seite für das zweite Licht diffus reflektierend gestaltet. Hierdurch lässt sich eine unerwünschte, relative Aufhellung auf der Lichtaustrittsfläche, hervorgerufen durch eine Wechselwirkung des zweiten Lichts mit dem Streuelement verhindern oder zumindest verringern. Auf diese Weise wird eine besonders homogen hell erscheinende Lichtabgabefläche ermöglicht. Außerdem wird dadurch, dass das Streuelement das zweite Licht diffus streut, die Gefahr vermindert, dass durch den an dem Streuelement reflektierten Anteil des zweiten Lichts im Weiteren eine unerwünschte Aufhellung entsteht. Hierzu ist erfindungsgemäß die der zuerst genannten Flachseite abgewandte Seite des Streuelements metallisiert, lackiert, beschichtet oder bedruckt.

Eine entsprechende relative Aufhellung lässt sich besonders effektiv verhindern bzw. verringern, wenn das Streuelement auf der, der zuerst genannten Flachseite abgewandten Seite, derart gestaltet ist, dass es für das zweite Licht einen Reflexionsgrad von mindestens 90%, vorzugsweise mindestens 95% aufweist. Außerdem lässt sich hierdurch derjenige Anteil des zweiten Lichts, der an dem Streuelement reflektiert wird, einer weiteren Verwendung zuführen, wodurch sich insbesondere die Effektivität der Leuchte steigern lässt.

Vorteilhaft ist das Streuelement auf der, der zuerst genannten Flachseite abgewandten Seite, derart gestaltet, dass es für das zweite Licht undurchlässig ist. Hierdurch lässt sich besonders zuverlässig eine entsprechende unerwünschte relative Aufhellung vermeiden.

Eine besonders geeignete, diffuse Reflexion des zweiten Lichts lässt sich erzielen, wenn das Streuelement auf der, der zuerst genannten Flachseite abgewandten Seite eine weiße und/oder metallisierte Oberfläche aufweist.

Vorzugsweise weist das Streuelement auf der, der zuerst genannten Flachseite abgewandten Seite eine Beschichtung auf, die eine weiße Schicht und/oder eine schwarze Schicht umfasst. Hierdurch lässt sich eine geeignete Reflexion des ersten Lichts bzw. eine Absorption des zweiten Lichts herstellungstechnisch vergleichsweise einfach erzielen.

Eine besonders geeignete diffuse Reflexion des ersten Lichts lässt sich erzielen, wenn das Streuelement eine nicht-plane Oberfläche aufweist, die vorzugsweise mit Bezug auf das Lichtleitelement konkav ausgebildet ist.

Weiterhin vorteilhaft weist die Leuchte außerdem eine diffus reflektierende Fläche auf, die mit Bezug auf die weitere Flachseite des Lichtleitelements der zuerst genannten Flachseite des Lichtleitelements gegenüberliegend und mit einem Abstand zu der weiteren Flachseite angeordnet ist. An dieser Fläche kann gegebenenfalls sowohl ein Teil des ersten Lichts, der über die weitere Flachseite aus dem Lichtleitelement ausgetreten ist, als auch ein Teil des zweiten Lichts, der an dem Streuelement reflektiert worden ist, reflektiert und einer weiteren Verwendung zugeführt werden; so lässt sich insgesamt die Effizienz der Leuchte steigern.

Die Leuchte weist vorteilhaft weiterhin ein Fokussierelement zum Fokussieren des zweiten Lichts auf, wobei durch die weitere Flachseite eine Flachseiten-Ebene festgelegt ist und die Leuchte derart ausgestaltet ist, dass das zweite Licht durch das Fokussierelement an einer Stelle fokussiert wird, die von der Flachseiten-Ebene nicht weiter entfernt ist als das Einfache, vorzugsweise nicht weiter entfernt als die Hälfte, besonders bevorzugt nicht weiter entfernt als ein Zehntel eines Abstands zwischen der zuerst genannten Flachseite und der weiteren Flachseite. Hierdurch lässt sich erzielen, dass ein vergleichsweise großer Teil der weiteren Flachseite durch das Streuelement eingenommen sein kann, wodurch die diffuse Streuung des ersten Lichts unterstützt ist. Beispielsweise kann vorgesehen sein, dass das Streuelement einen Flächenbereich der weiteren Flachsseite einnimmt, der mindestens so groß ist wie 80%, vorzugsweise 90% des Bereichs der Lichtabgabefläche, der von dem ersten Licht durchsetzt wird.

Vorteilhaft umfasst das Fokussierelement einen Reflektor und/oder eine Linse.

Eine räumliche Verstellbarkeit des zweiten Lichts lässt erzielen, wenn die zweite Lichtquelle schwenkbar gegenüber der restlichen Leuchte angeordnet ist.

In einer bevorzugten Ausführung handelt es sich bei der Leuchte um eine Deckenleuchte.

Die Erfindung wird im Folgenden anhand von Ausführungsbeispielen und mit Bezug auf die Zeichnungen näher erläutert. Es zeigen:
- Fig. 1: eine schematische Skizze zu einem ersten Ausfuhrungsbeispiel,
- Fig. 2: eine perspektivische Schnittdarstellung hierzu und
- Fig. 3: eine schematische Skizze zu einem zweiten Ausführungsbeispiel.

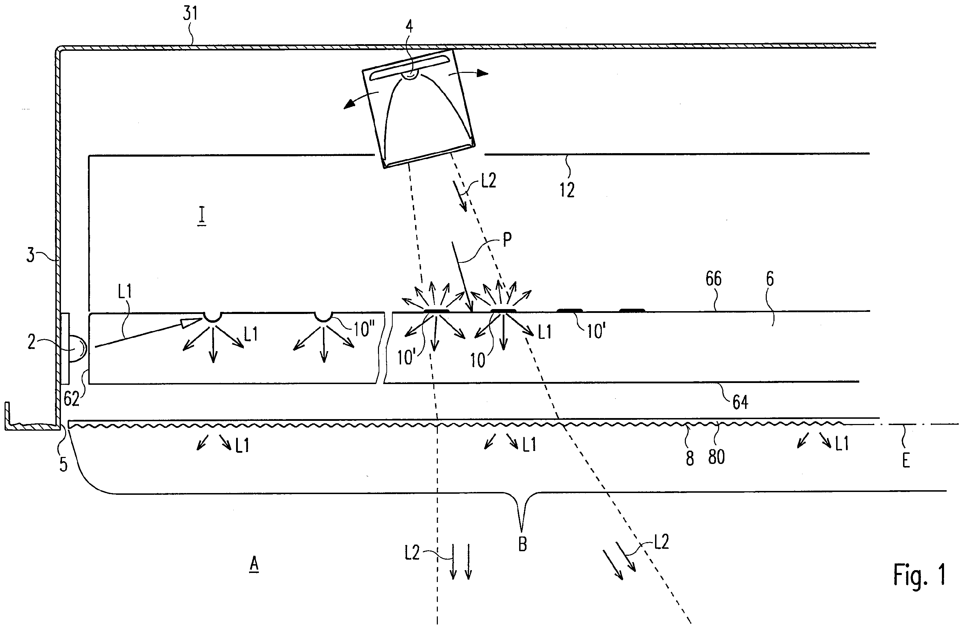

Fig. 1 zeigt sehr schematisch einen Ausschnitt eines Querschnitts durch eine Leuchte gemäß dem ersten Ausführungsbeispiel. Die Leuchte weist eine erste Lichtquelle 2 auf, die vorzugsweise in einem, beispielsweise wannenförmigen, Leuchtengehäuse 3 angeordnet ist. Die erste Lichtquelle 2 kann eine Platine mit wenigstens einer LED umfassen, vorzugsweise eine Platine mit mehreren, längs einer Geraden angeordneten LEDs.

Weiterhin weist die Leuchte eine zweite Lichtquelle 4 auf, bei der es sich insbesondere um eine Lichtquelle zur Erzeugung eines gebündelten Lichts bzw. eines Lichtkegels handeln kann, also beispielsweise um einen "Spot". Die zweite Lichtquelle 4 kann wenigstens eine LED umfassen bzw. aus einer solchen gebildet sein. Vorteilhaft ist auch die zweite Lichtquelle 4 in dem Leuchtengehäuse 3 angeordnet. Vorteilhaft ist die zweite Lichtquelle 4 schwenkbar bzw. drehbar gegenüber der restlichen Leuchte oder gegenüber dem Leuchtengehäuse 3 angeordnet. Hierdurch lässt sich eine entsprechende Einstellbarkeit der zweiten Lichtquelle 4 erzielen.

Weiterhin weist die Leuchte ein Lichtleitelement 6 auf, das eine Schmalseite 62 und eine Flachseite 64 umfasst. Insbesondere kann das Lichtleitelement 6 zumindest in erster Näherung plattenförmig oder quaderförmig sein, so dass diese Form zwei größte Oberflächenbereiche gegeben sind, wobei hier diese beiden größten Oberflächenbereiche als "Flachseiten" bezeichnet sind, sowie ein weiterer Oberflächenbereich, der die beiden "Flachseiten" seitlich verbindet, der hier als "Schmalseite" bezeichnet ist.

Durch das Leuchtengehäuse 3 kann eine Lichtaustrittsöffnung 5 festgelegt sein, die insbesondere innerhalb einer Ebene *E* verlaufend ausgestaltet sein kann, wobei die Leuchte vorzugsweise derart ausgestaltet ist, dass die Flachseite 64 des Lichtleitelements 6 zumindest in erster Näherung plan und dabei parallel zu der Ebene *E* orientiert ist. Das Leuchtengehäuse 3 kann weiterhin eine Bodenwand 31 aufweisen, die parallel zu der Ebene *E* verlaufend ausgebildet ist.

Weiterhin weist die Leuchte eine Lichtabgabefläche 8 auf, wobei die Leuchte derart gestaltet ist, dass ein, von der ersten Lichtquelle 2 erzeugtes, erstes Licht *L1* über die Schmalseite 62 in das Lichtleitelement 6 eintritt, über die Flachseite 64 das Lichtleitelement 6 verlässt und schließlich einen Bereich *B* der Lichtabgabefläche 8 durchsetzend, in einen Außenraum *A* der Leuchte abgegeben wird.

Vorzugsweise ist die Lichtabgabefläche 8 durch ein zumindest teilweise lichtdurchlässiges Lichtabgabeelement 80 gebildet, das insbesondere in der Ebene *E* liegend angeordnet sein kann bzw. in der Lichtaustrittsöffnung 5. Vorteilhaft mit Bezug auf einen Schutz eines durch das Leuchtengehäuse 3 festgelegten Innenbereichs *I* der Leuchte kann das Lichtabgabeelement 80 die Lichtaustrittsöffnung 5 abdeckend angeordnet sein.

Wie in Fig. 1 beispielhaft gezeigt, kann zwischen dem Lichtleitelement 6 und dem Lichtabgabeelement 80 ein Zwischenraum vorgesehen sein, in dem vorzugsweise kein weiteres, optisch wirksames Bauteil der Leuchte angeordnet ist.

Weiterhin ist die Leuchte derart gestaltet, dass ein von der zweiten Lichtquelle 4 erzeugtes, zweites Licht *L2* gebündelt in den Außenraum *A* der Leuchte abgegeben wird. Die zweite Lichtquelle 4 kann mit Bezug auf das Lichtleitelement 6 der Lichtabgabefläche 8 gegenüberliegend angeordnet sein.

Insbesondere kann die Ausgestaltung derart sein, dass das erste Licht *L1* von der Leuchte flächig und diffus über die beispielsweise rechteckige oder kreisförmige Lichtabgabefläche 8 abgegeben wird; das erste Licht *L1* kann dazu ausgelegt sein, eine allgemeine Raumbeleuchtung zu erzeugen. Das zweite Licht *L2* kann als gerichtetes bzw. kegelförmiges Spotlicht zur Erzeugung einer Objektbeleuchtung ausgebildet sein.

Das Lichtleitelement 6 weist außerdem eine weitere Flachseite 66 auf, wobei die Leuchte derart gestaltet ist, dass das zweite Licht *L2* über die weitere Flachseite 66 in das Lichtleitelement 6 eintritt und den Bereich *B* der Lichtabgabefläche 8 zumindest teilweise durchsetzend, in den Außenraum *A* der Leuchte abgegeben wird. Somit ist es nicht erforderlich, für das erste Licht *L1* und das das zweite Licht *L2* zwei separate Lichtabgabebereiche vorzusehen. Hierdurch sind die Gestaltungsmöglichkeiten der Leuchte verbessert. Dies ist beispielsweise von Vorteil, wenn die Leuchte zur Beleuchtung eines Schaufensters oder dergleichen verwendet werden soll, wobei mit dem ersten Licht eine allgemeine Beleuchtung erzeugt werden soll und das zweite Licht zur gezielten Ausleuchtung eines Objekts dienen soll.

Wie in Fig. 1 angedeutet, kann die Gestaltung derart sein, dass das zweite Licht *L2* vollständig innerhalb des Bereichs *B* die Lichtabgabefläche 8 durchsetzt.

Eine besonders geeignete, diffuse Abgabe des ersten Lichts *L1* lässt sich erzielen, wenn die weitere Flachseite 66 des Lichtleitelements 6 ein Streuelement 10 zur diffusen Streuung des ersten Lichts *L1* aufweist. Wie in Fig. 1 skizziert angedeutet, können insgesamt zwei oder mehrere Streuelemente 10' vorgesehen sein, die insbesondere alle analog zu dem zuerst genannten und im Folgenden noch näher beschriebenen Streuelement 10 ausgebildet sein können. Beispielsweise kann durch die Streuelemente 10' eine Punkt- und/oder Linienstruktur auf der weiteren Flachseite 66 gebildet sein.

Die Ausgestaltung der Leuchte ist dabei weiterhin vorzugsweise derart, dass das zweite Licht *L2* zumindest teilweise neben dem Streuelement 10 in das Lichtleitelement 6 eintritt, wie in Fig. 1 durch einen Pfeil *P* angedeutet. Der so in das Lichtleitelement 6 eingetretene Teil des zweiten Lichts *L2* kann dann im Weiteren die Leuchte über die Lichtabgabefläche 8 verlassen, ohne dass dessen Bündelung von dem Streuelement 10 signifikant aufgelöst bzw. beeinträchtigt wird.

Auf einer, der zuerst genannten Flachseite 64 abgewandten Seite, also mit Bezug auf Fig. 1 "oben", ist vorzugsweise das Streuelement 10 für das zweite Licht *L2* diffus reflektierend gestaltet, also insbesondere nicht spiegelnd. Dadurch, dass das Streuelement 10 das zweite Licht *L2* diffus streut, ist die Wahrscheinlichkeit verringert, dass durch den an dem Streuelement 10 reflektierten Anteil des zweiten Lichts *L2* im Weiteren eine unerwünschte Aufhellung auf der Lichtaustrittsfläche 8 entsteht. Dies gilt insbesondere auch für denjenigen Anteil des zweiten Lichts *L2,* der nach Wechselwirkung mit dem Streuelement 10 eine weitere Wechselwirkung mit Bauteilen der Leuchte erfährt, beispielsweise durch eine weitere Reflexion an einer Fläche, die zum Innenbereich *I* der Leuchte weist.

Diese diffuse Eigenschaft des Streuelements 10 kann beispielsweise herstellungstechnisch vorteilhaft durch Metallisierung, Lackierung, Beschichtung, insbesondere eine weiße Beschichtung oder Bedruckung gebildet sein.

Dabei ist es vorteilhaft, wenn ein besonders hoher Anteil desjenigen Teils des zweiten Lichts *L2*, der auf das Streuelement 10 auftrifft, reflektiert wird. Beispielsweise kann die Ausgestaltung derart sein, dass das Streuelement 10 auf der entsprechenden Seite für das zweite Licht *L2* einen Reflexionsgrad von mindestens 90% oder, noch besser wenigstens 95% aufweist. Das Streuelement 10 kann hierzu an der betreffenden Seite beispielsweise eine Oberfläche aufweisen, die weiß ist und/oder metallisiert.

Die Wahrscheinlichkeit einer unerwünschten relativen Aufhellung auf der Lichtaustrittsfläche 8, hervorgerufen durch das zweite Licht *L2,* lässt sich weiterhin verringern, indem das Streuelement 10 auf der, der zuerst genannten Flachseite 64 abgewandten Seite bzw. "oben", derart gestaltet ist, dass es für das zweite Licht *L2* zumindest im Wesentlichen undurchlässig ist.

Beispielsweise kann vorgesehen sein, dass das Streuelement 10 eine Beischichtung aufweist oder aus einer solchen gebildet ist, die eine weiße Schicht und eine schwarze Schicht umfasst. Die weiße Schicht kann der Reflexion des ersten Lichts *L1* dienen und die schwarze Schicht der Undurchlässigkeit für das zweite Licht *L2*. Dementsprechend kann die weiße Schicht zur zuerst genannten Flachseite 64 weisen und die schwarze Schicht in die entgegengesetzte Richtung. Außerdem kann vorteilhaft über dieser schwarzen Schicht noch eine weitere weiße Schicht vorgesehen sein, durch die die diffuse Reflexion des zweiten Lichts *L2* erzielt bzw. gefördert wird. Dementsprechend kann das Streuelement 10 also eine Struktur mit drei Schichten aufweisen, wobei die beiden äußeren Schichten weiß sind und die mittlere Schicht schwarz ist. Diese Schichten können herstellungstechnisch vorteilhaft durch Bedrucken bzw. Beschichten der weiteren Flachseite 66 gebildet sein.

In einer besonders geeigneten Ausgestaltung weist das Streuelement, wie in Fig. 1 anhand des Streuelements 10" skizziert, eine nicht-plane Oberfläche auf, die vorzugsweise mit Bezug auf das Lichtleitelement 6 konkav ausgebildet ist. Diese Gestaltung ist insbesondere auch effektiv mit Bezug auf die Reflexionseigenschaften des Streuelements 10, sowohl mit Bezug auf das erste Licht *L1,* als auch mit Bezug auf das zweite Licht *L2.* Die entsprechende Oberfläche des Streuelements 10 kann beispielsweise durch Gravieren gebildet sein.

Weiterhin vorteilhaft weist die Leuchte außerdem eine diffus reflektierende, vorzugsweise weiße Fläche 12 auf, die mit Bezug auf die weitere Flachseite 66 des Lichtleitelements 6 der zuerst genannten Flachseite 64 des Lichtleitelements 6 gegenüberliegend und dabei mit einem Abstand zu der weiteren Flachseite 66 angeordnet ist. An dieser Fläche 12 kann gegebenenfalls sowohl ein Teil des ersten Lichts *L1*, der über die weitere Flachseite 66 aus dem Lichtleitelement 6 austritt, als auch ein Teil des zweiten Lichts *L2*, der an dem Streuelement 10 reflektiert wird, reflektiert werden und beispielsweise im Folgenden das Lichtleitelement 6 durchsetzen und über die Lichtaustrittsfläche 8 die Leuchte verlassen. Auf diese Weise lässt sich die Effizienz der Leuchte steigern.

Die reflektierende Fläche 12 kann Teil einer weißen, beispielsweise wannenförmigen Box sein, deren Rand vorzugsweise unmittelbar an den Rand des Lichtleitelements 6 grenzt. In dieser Box lässt sich also sozusagen das an dem Streuelement 10 bzw. an den Streuelementen 10' reflektierte Licht recyceln. Die Box kann, wie in Fig. 1 angedeutet, innerhalb des Leuchtengehäuses 3 angeordnet sein.

Vorteilhaft ist die zweite Lichtquelle 4 schwenkbar gegenüber der restlichen Leuchte oder gegenüber dem Leuchtengehäuse 3 oder der Box angeordnet. Hierdurch lässt sich eine geeignete Verstellbarkeit des zweiten Lichts *L2* erzielen.

In einer bevorzugten Ausführung handelt es sich bei der Leuchte um eine Deckenleuchte.

Die Lichtaustrittsfläche 8 kann ein Oberflächenbereich des Lichtleitelements 6 sein. Vorzugsweise jedoch weist die Leuchte weiterhin - wie in Fig. 1 angedeutet - ein diffus wirkendes Diffusorelement auf, wobei die Lichtaustrittsfläche 8 durch eine Oberfläche des Diffusorelements gebildet ist. Bei dem Diffusorelement kann es sich um einen leichten Diffusor mit Kleinwinkelstreuung handeln. Das Diffusorelement kann vorteilhaft durch das oben erwähnte Lichtabgabeelement 80 gebildet sein. Durch das Diffusorelement 80 lässt sich bewirken, dass ein Punktemuster oder dergleichen, hervorgerufen durch die Streuelemente 10', aufgelöst wird bzw. dass die zweite Lichtquelle 4 und/oder die Box kaschiert wird bzw. werden.

Wie in Fig. 1 exemplarisch skizziert, kann die zweite Lichtquelle 4 in einem Abstand von dem Lichtleitelement 6 angeordnet sein; dieser Abstand kann beispielsweise zwischen dem Doppelten und dem Zehnfachen der Stärke des Lichtleitelements 6 betragen. Die Anordnung kann derart sein, dass die wannenförmige Box eine Lichtdurchlassöffnung aufweist, durch die hindurch das zweite Licht *L2* tritt, wobei die zweite Lichtquelle 4 mit Bezug auf die Form der Box außerhalb der Box angeordnet ist. Vorzugsweise ist die zweite Lichtquelle 4 derart schwenkbar angeordnet, dass die entsprechende Schwenkachse zumindest im Wesentlichen durch die Lichtdurchlassöffnung verläuft. Somit lässt sich die Lichtdurchlassöffnung vergleichsweise klein gestalten.

Letztendlich wird durch die dargestellte Lösung erzielt, dass das seitlich in das Lichtleitelement eingekoppelte erste Licht *L1* in an sich bekannter Weise diffus an den Streuelementen 10' umgelenkt wird, sodass es die Leuchte wie beschrieben verlassen kann. Derjenige Teil des zweiten Lichts *L2* bzw. des Spotlichts, der auf die Streuelemente 10' trifft, erhellt diese nicht störend, derjenige Teil, der zwischen den Streuelementen 10' in das Lichtleitelement 6 eintritt, kann ungehindert durch dieses hindurchtreten, sodass dessen Richtung zumindest im Wesentlichen beibehalten wird. Die zweite Lichtquelle 4 ist bei Blick auf die Leuchte nicht störend sichtbar.

Die Streuelemente 10' sind vorzugsweise gleichmäßig auf der weiteren Flachseite 66 verteilt angeordnet. Hierdurch wird erzielt, dass bei einer Änderung der Abstrahlrichtung der zweiten Lichtquelle 4 bzw. des zweiten Lichts *L2* keine Helligkeitsveränderung des von der Leuchte gebündelt abgegebenen Lichts auftritt.

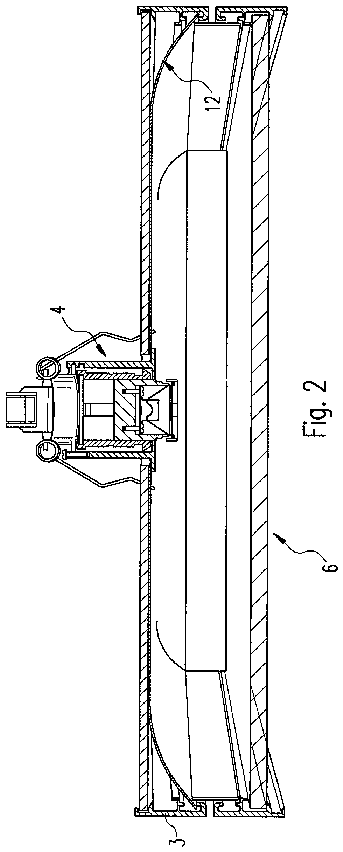

In Fig. 2 ist eine perspektivische Skizze gezeigt, die die beschrieben Strukturen weiterhin verdeutlicht.

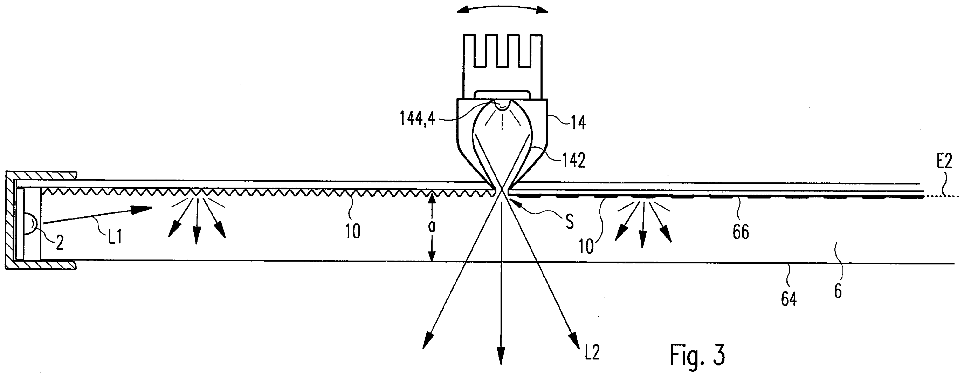

In Fig. 3 ist ein zweites Ausführungsbeispiel gezeigt. Soweit nicht anders beschrieben, gelten die obigen Ausführungen auch für das zweite Ausführungsbeispiel. Die Bezugszeichen sind analog gebraucht.

Gemäß diesem zweiten Ausführungsbeispiel weist die Leuchte weiterhin ein Fokussierelement 14 zum Fokussieren des zweiten Lichts *L2* auf. Dabei ist die Ausgestaltung derart, dass das von der zweiten Lichtquelle 4 erzeugte Licht durch das Fokusierelement 14 so gebündelt wird, dass es etwa bei Eintritt in das Lichtleitelement 6, also auf Höhe der weiteren Flachseite 66, die größte Bündelung aufweist. Hierdurch lässt sich erzielen, dass ein vergleichsweise großer Teil der weiteren Flachseite 66 durch das Streuelement 10 bzw. durch die Streuelemente 10' eingenommen sein kann, wodurch die diffuse Streuung des ersten Lichts *L1* unterstützt ist.

Dies sei im Folgenden noch wie folgt präzisiert: Durch die weitere Flachseite 66 ist eine Flachseiten-Ebene *E2* festgelegt und die Leuchte ist derart ausgestaltet ist, dass das zweite Licht *L2* durch das Fokussierelement 14 an einer Stelle *S* fokussiert wird, die von der Flachseiten-Ebene *E2* nicht weiter entfernt ist, als das Einfache, vorzugsweise nicht weiter entfernt als die Hälfte, besonders bevorzugt nicht weiter entfernt als ein Zehntel eines Abstands *a* zwischen der zuerst genannten Flachseite 64 und der weiteren Flachseite 66.

Beispielsweise kann in diesem Fall vorgesehen sein, dass das Streuelement 10 einen Flächenbereich der weiteren Flachsseite 66 einnimmt, der mindestens so groß ist wie 80%, vorzugsweise 90% des Bereichs *B* der Lichtabgabefläche 8, der von dem ersten Licht *L1* durchsetzt wird. Vorzugsweise ist die weitere Flachseite 66 abgesehen von der Stelle S vollständig von dem Streuelement 10 bedeckt. Es ist dementsprechend vorteilhaft zweckmäßig vorgesehen, dass das Streuelement 10 lediglich an der Stelle *S* einen entsprechenden Freiraum aufweist.

Das Fokussierelement 14 ist vorzugsweise derart ausgestaltet, dass die Bündelung des zweiten Lichts *L2* möglichst stark ist, so dass der genannte Freiraum möglichst klein gestaltet sein kann. Beispielsweise kann die Bündelung so stark vorgesehen sein, dass der Durchmesser des durch das zweite Licht *L2* gebildeten Lichtkegels an der Stelle *S* maximal ein Zehntel des Abstands *a* beträgt.

Die Schwenkbarkeit der zweiten Lichtquelle 4 ist in diesem Fall entsprechend vorteilhaft so vorgesehen, dass die entsprechende Schwenkachse durch die Stelle S verläuft.

Natürlich können mehrere, analog gestaltete zweite Lichtquellen bzw. Spots vorgesehen sein, wobei dann pro Lichtquelle jeweils eine entsprechende Stelle bzw. jeweils ein Freiraum zum Lichtdurchtritt vorgesehen ist.

Das Fokussierelement 14 umfasst vorzugsweise einen Reflektor 142 und/oder eine Linse 144.

Wie in Fig. 3 exemplarisch links von der Stelle *S* skizziert, kann das Streuelement zur diffusen Streuung des ersten Lichts *L1* eine Feinstruktur aufweisen. Wie exemplarisch rechts der Stelle *S* dargestellt, kann das Streuelement, wie weiter oben näher dargestellt, eine Beschichtung aufweisen. In jedem Fall kann auf der, der zuerst genannten Flachseite 64 gegenüber liegenden Seite des Streuelements eine weiße Fläche vorgesehen sein.

## Patentansprüche

1. Leuchte, aufweisend
- eine erste Lichtquelle (2),
- eine zweite Lichtquelle (4),
- ein Lichtleitelement (6) mit einer Schmalseite (62) und einer Flachseite (64) und
- eine Lichtabgabefläche (8),
wobei die Leuchte derart gestaltet ist, dass ein, von der ersten Lichtquelle (2) erzeugtes, erstes Licht (*L1*) über die Schmalseite (62) in das Lichtleitelement (6) eintritt, über die Flachseite (64) das Lichtleitelement (6) verlässt und einen Bereich (*B*) der Lichtabgabefläche (8) durchsetzend, in einen Außenraum (*A*) der Leuchte abgegeben wird und
ein, von der zweiten Lichtquelle (4) erzeugtes, zweites Licht (*L2*) gebündelt in den Außenraum (*A*) der Leuchte abgegeben wird,
wobei das Lichtleitelement (6) außerdem eine weitere Flachseite (66) aufweist, wobei die Leuchte derart gestaltet ist, dass das zweite Licht (*L2*) über die weitere Flachseite (66) in das Lichtleitelement (6) eintritt und den Bereich (*B*) der Lichtabgabefläche (8) zumindest teilweise durchsetzend, in den Außenraum (*A*) der Leuchte abgegeben wird,
wobei die weitere Flachseite (66) ein Streuelement (10) zur diffusen Streuung des ersten Lichts (*L1*) aufweist, wobei die Leuchte derart gestaltet ist, dass das zweite Licht (*L2*) zumindest teilweise neben dem Streuelement (10) in das Lichtleitelement (6) eintritt,
**dadurch gekennzeichnet,**
**dass** das Streuelement (10) auf einer, der zuerst genannten Flachseite (64) abgewandten Seite durch Metallisierung, Lackierung, Beschichtung oder Bedruckung für das zweite Licht (*L2*) diffus reflektierend gestaltet ist.

2. Leuchte nach Anspruch 1,
bei der das Streuelement (10) auf der, der zuerst genannten Flachseite (64) abgewandten Seite, derart gestaltet ist, dass es für das zweite Licht (*L2*) einen Reflexionsgrad von mindestens 90%, vorzugsweise mindestens 95% aufweist.

3. Leuchte nach Anspruch 1 oder 2,
bei der das Streuelement (10) auf der, der zuerst genannten Flachseite (64) abgewandten Seite, derart gestaltet ist, dass es für das zweite Licht (*L2*) undurchlässig ist.

4. Leuchte nach einem der vorhergehenden Ansprüche,
bei der das Streuelement (10) auf der, der zuerst genannten Flachseite (64) abgewandten Seite eine weiße und/oder metallisierte Oberfläche aufweist.

5. Leuchte nach einem der vorhergehenden Ansprüche,
bei der das Streuelement (10) auf der, der zuerst genannten Flachseite (64) abgewandten Seite eine Beschichtung aufweist, die eine weiße Schicht und eine schwarze Schicht umfasst.

6. Leuchte nach einem der vorhergehenden Ansprüche,
bei der das Streuelement (10) eine nicht-plane Oberfläche aufweist, die vorzugsweise mit Bezug auf das Lichtleitelement (6) konkav ausgebildet ist.

7. Leuchte nach einem der vorhergehenden Ansprüche,
weiterhin aufweisend
- eine diffus reflektierende Fläche (12), die mit Bezug auf die weitere Flachseite (66) des Lichtleitelements (6) der zuerst genannten Flachseite (64) gegenüberliegend und mit einem Abstand zu der weiteren Flachseite (66) angeordnet ist.

8. Leuchte nach einem der vorhergehenden Ansprüche,
weiterhin aufweisend
- ein Fokussierelement (14) zum Fokussieren des zweiten Lichts (*L2*), wobei durch die weitere Flachseite (66) eine Flachseiten-Ebene (*E2*) festgelegt ist und die Leuchte derart ausgestaltet ist, dass das zweite Licht (*L2*) durch das Fokussierelement (14) an einer Stelle (*S*) fokussiert wird, die von der Flachseiten-Ebene (*E2*) nicht weiter entfernt ist als das Einfache, vorzugsweise nicht weiter entfernt als die Hälfte, besonders bevorzugt nicht weiter entfernt als ein Zehntel eines Abstands (*a*) zwischen der zuerst genannten Flachseite (64) und der weiteren Flachseite (66).

9. Leuchte nach Anspruch 8,
bei der das Fokussierelement (14) einen Reflektor (142) und/oder eine Linse (144) umfasst.

10. Leuchte nach Anspruch 8 oder 9,
bei der das Streuelement (10) einen Flächenbereich der weiteren Flachsseite (66) einnimmt, der mindestens so groß ist wie 80%, vorzugsweise wie 90% des Bereichs (*B*) der Lichtabgabefläche (8).

11. Leuchte nach einem der vorhergehenden Ansprüche,
bei der die zweite Lichtquelle (4) schwenkbar gegenüber der restlichen Leuchte angeordnet ist.

12. Leuchte nach einem der vorhergehenden Ansprüche
in Form einer Deckenleuchte.

## Claims

1. A luminaire, having
- a first light source (2),
- a second light source (4),
- a light-conducting element (6) with a narrow side (62) and a flat side (64) and
- a light emission surface (8),
wherein the luminaire is designed in such a manner that a first light (L1) generated by the first light source (2) enters via the narrow side (62) into the light-conducting element (6), leaves the light-conducting element (6) via the flat side (64) and passing through an area (B) of the light emission surface (8), is emitted into an outer area (A) of the luminaire and a second light (L2) generated by the second light source (4) is emitted bundled into the outer area (A) of the luminaire,
wherein the light-conducting element (6) also has a further flat side (66),
wherein the luminaire is designed in such a manner that the second light (L2) enters via the further flat side (66) into the light-conducting element (6) and at least partially passing through the area (B) of the light emission surface (8), is emitted into the outer area (A) of the luminaire,
wherein the further flat side (66) has a scattering element (10) for diffuse scattering of the first light (L1), wherein the luminaire is designed in such a manner that the second light (L2) at least partially enters into the light-conducting element (6) next to the scattering element (10),
**characterized in**
**that** the scattering element (10) is designed to be diffusely reflective on a side facing away from the first-mentioned flat side (64) by metallization, painting, coating or imprinting for the second light (L2).

2. A luminaire according to Claim 1,
in which the scattering element (10), on the side facing away from the first-mentioned flat side (64), is designed in such a manner that for the second light (L2) it has a degree of reflection of at least 90%, preferably at least 95%.

3. A luminaire according to Claim 1 or 2,
in which the scattering element (10), on the side facing away from the first-mentioned flat side (64), is designed in such a manner that it is impermeable for the second light (L2).

4. A luminaire according to any one of the preceding claims,
in which the scattering element (10), on the side facing away from the first-mentioned flat side (64), has a white and/or metallized surface.

5. A luminaire according to any one of the preceding claims,
in which the scattering element (10), on the side facing away from the first-mentioned flat side (64), has a coating, which comprises a white layer and a black layer.

6. A luminaire according to any one of the preceding claims,
in which the scattering element (10) has a non-planar surface, which is designed preferably concavely with respect to the light-conducting element (6).

7. A luminaire according to any one of the preceding claims,
further having
- a diffusely reflective surface (12), which is arranged with respect to the further flat side (66) of the light-conducting element (6) opposite the first-mentioned flat side (64) and at a distance from the further flat side (66).

8. A luminaire according to any one of the preceding claims,
further having
- a focusing element (14) for focusing the second light (L2), wherein a flat side-plane (E2) is defined by the further flat side (66) and the luminaire is embodied in such a manner that the second light (L2) is focused by the focusing element (14) at a location (S), which is not further away from the flat side-plane (E2) than the simple, preferably not further away than half, particularly preferably not further away than a tenth of a distance (a) between the first-mentioned flat side (64) and the further flat side (66).

9. A luminaire according to Claim 8,
In which the focusing element (14) comprises a reflector (142) and/or a lens.

10. A luminaire according to Claim 8 or 9,
in which the scattering element (10) occupies a flat area of the further flat side (66), which is at least as large as 80%, preferably as 90% of the area (B) of the light emission surface (8).

11. A luminaire according to any one of the preceding claims,
in which the second light source (4) is arranged pivotably in respect to the remaining luminaire.

12. A luminaire according to any one of the preceding claims in the form of a ceiling luminaire.

## Revendications

1. Luminaire comprenant :
- une première source de lumière (2),
- une deuxième source de lumière (4),
- un élément de guidage de lumière (6) avec un côté étroit (62) et un côté plat (64) et
- une surface d'émission de lumière (8),
le luminaire étant conçu de façon à ce qu'une première lumière (L1) produite par la première source de lumière (2) entre dans l'élément de guidage de lumière (6) par le côté étroit (62), quitte l'élément de guidage de lumière (6) par le côté plat (64) et à ce qu'elle soit émise vers un espace extérieur (A) du luminaire en traversant une zone (B) de la surface d'émission de lumière (8) et
une deuxième lumière (L2) produite par la deuxième source de lumière (4) est émise de manière focalisée vers l'espace extérieur (A) du luminaire,
l'élément de guidage de lumière (6) comprenant en outre un côté plat supplémentaire (66),
le luminaire étant conçu de façon à ce que la deuxième lumière (L2) entre dans l'élément de guidage de lumière (6) par le côté plat supplémentaire (66) et à ce qu'elle soit émise vers un espace extérieur (A) du luminaire en traversant au moins partiellement une zone (B) de la surface d'émission de lumière (8),
le côté plat supplémentaire (66) comprenant un élément diffuseur (10) pour la diffusion de la première lumière (L1), le luminaire étant conçu de façon à ce que la deuxième lumière entre dans l'élément de guidage de lumière (6) au moins partiellement à côté de l'élément diffuseur (10),
**caractérisé en ce que**
l'élément diffuseur (10) est conçu de manière à réfléchir de manière diffuse la deuxième lumière (L2) sur un côté opposé au côté plat (64) mentionné ci-dessus, par métallisation, peinture, revêtement ou impression.

2. Luminaire selon la revendication 1,
dans lequel l'élément diffuseur (10) est conçu, sur le côté opposé au côté plat (64) mentionné ci-dessus, de façon à présenter, pour la deuxième lumière (L2), un taux de réflexion d'au moins 90 %, de préférence d'au moins 95 %.

3. Luminaire selon la revendication 1 ou 2,
dans lequel l'élément diffuseur (10) est conçu, sur le côté opposé au côté plat (64) mentionné ci-dessus, de façon à être opaque pour la deuxième lumière (L2).

4. Luminaire selon l'une des revendications précédentes,
dans lequel l'élément diffuseur (10) présente, sur le côté opposé au côté plat (64) mentionné ci-dessus, une surface blanche et/ou métallisée.

5. Luminaire selon l'une des revendications précédentes,
dans lequel l'élément diffuseur (10) comprend, sur le côté opposé au côté plat (64) mentionné ci-dessus, un revêtement qui comprend une couche blanche et une couche noire.

6. Luminaire selon l'une des revendications précédentes,
dans lequel l'élément diffuseur (10) présente une surface non plane qui est conçue de préférence de manière concave par rapport à l'élément de guidage de lumière (6).

7. Luminaire selon l'une des revendications précédentes,
comprenant en outre
- une surface à réflexion diffuse (12), disposée de manière opposée au côté plat (64) mentionné ci-dessus par rapport au côté plat supplémentaire (66) de l'élément de guidage de lumière (6) et à une certaine distance du côté plat supplémentaire (66).

8. Luminaire selon l'une des revendications précédentes,
comprenant en outre
- un élément de focalisation (14) pour la focalisation de la deuxième lumière (L2), le côté plat supplémentaire (66) définissant un plan de côté plat (E2) et le luminaire étant conçu de façon à ce que la deuxième lumière (L2) soit focalisée par l'élément de focalisation (14) à un endroit (S) qui n'est pas éloigné du plan de côté plat (E2) de plus d'une fois, de préférence de plus de la moitié, de préférence pas éloigné de plus d'un dixième d'une distance (a) entre le côté plat (64) mentionné ci-dessus et le côté plat supplémentaire (66).

9. Luminaire selon la revendication 8,
dans lequel l'élément de focalisation (14) comprend un réflecteur (142) et/ou une lentille (144).

10. Luminaire selon la revendication 8 ou 9,
dans lequel l'élément diffuseur (10) englobe une surface du côté plat supplémentaire (66) qui représente 80 %, de préférence 90 % de la zone (B) de la surface d'émission de lumière (8).

11. Luminaire selon l'une des revendications précédentes,
dans lequel la deuxième source de lumière (4) est disposée de manière pivotante par rapport au reste du luminaire.

12. Luminaire selon l'une des revendications précédentes,
sous la forme d'un plafonnier.
